# EUROPÄISCHE PATENTANMELDUNG

(11) **EP 3 588 017 A1**
(43) Veröffentlichungstag der Anmeldung: **01.01.2020**
(21) Anmeldenummer: 18180016.0
(22) Anmeldetag: 27.06.2018
(51) Int. Cl.: G01F 1/66

(54) **ULTRASCHALLMESSVORRICHTUNG**

(71) Anmelder: Sensus Spectrum LLC, Raleigh, NC 27615 (US)
(72) Erfinder: MENSCH, Michael Andreas, 67098 Baddürkheim (DE)
(74) Vertreter: Patentanwälte Dr. Keller, Schwertfeger Partnerschaft mbB

(57) **Zusammenfassung**

Die Erfindung betrifft eine Messvorrichtung zur Bestimmung des Durchflusses eines durch einen Rohrabschnitt hindurchströmenden Fluids, umfassend ein Messrohr (14; 114; 414, 416) mit einer Rohrwand, wenigstens einen Sender zum Senden eines akustischen Signals, wenigstens einen Empfänger zum Empfangen des vom Sender abgegebenen akustischen Signals, eine Reflexionsfläche zur Reflexion des akustischen Signals und eine Datenerfassungseinheit, wobei sowohl der Sender als auch der Empfänger als eine Ultraschallvorrichtung (20; 120; 210; 310; 440) ausgebildet sind, die jeweils an dem Messrohr (14; 114; 414, 416) angeordnet ist und ein Koppelelement (222; 330, 444) und ein Ultraschallwandlerelement (320) umfasst, wobei das Messrohr (14; 114; 414, 416) wenigstens eine Aufnahme für eine Ultraschallvorrichtung (20; 120; 210; 310; 440) aufweist, wobei die Aufnahme entweder als eine Auflagefläche (33) auf der Außenseite des Messrohrs (14; 114) oder als Durchgang (422, 424) durch die Rohrwand des Messrohrs (414, 416) ausgebildet ist und wobei ein Messgerätegehäuse (12; 112) vorgesehen ist, welches den Sender, den Empfänger und die Datenerfassungseinheit vor äußeren Einflüssen schützt.

## Beschreibung

Die vorliegende Erfindung betrifft eine Messvorrichtung zur Bestimmung des Durchflusses eines durch einen Rohrabschnitt hindurchströmenden Fluids. Insbesondere betrifft die vorliegende Erfindung eine Messvorrichtung zur Bestimmung des Durchflusses des durch einen Rohrabschnitt hindurchströmenden Fluids mittels Ultraschallsensoren nach dem Laufzeitdifferenzverfahren.

Eine Möglichkeit, den Durchfluss eines durch einen Rohrabschnitt hindurchströmenden Fluids zu bestimmen, basiert auf einem Ultraschallmessverfahren. Die Bestimmung des Durchflusses mittels Ultraschall basiert auf einer Laufzeitdifferenz eines Signals in einer strömenden Flüssigkeit im Vergleich zu einer ruhenden Flüssigkeit. Hierbei werden akustische Signale mittels eines Ultraschallsenders schräg zur Strömungsrichtung des Fluids in ein Messrohr eingekoppelt. Ein Ultraschallempfänger nimmt das Signal am Ende einer vorgestimmten Wegstrecke des Signals auf. Aus der gemessenen Laufzeit des Signals im Vergleich zu einem Zustand, in dem das Fluid im Messrohr nicht strömt, lässt sich in Kenntnis der Messrohrgeometrie der Durchfluss eines strömenden Fluids durch das Messrohr bestimmen. Um den Laufweg des Signals zu verlängern oder aus baulichen Gründen, sind zwischen Sender und Empfänger Reflexionsstellen vorgesehen, an denen das eingekoppelte Signal reflektiert wird.

Zur Durchführung dieser Messung werden in der Regel mindestens zwei Messvorrichtungen mit einem Ultraschall-Wandler oder Ultraschall-Sensor verwendet. Da Ultraschallvorrichtungen sowohl als Empfänger als auch als Sender dienen können, wird eine Ultraschallvorrichtung als Empfänger und die andere als Sender verwendet. Der Sender und der Empfänger sind in einem vorgegebenen Abstand an der Außenwand eines Messrohrs befestigt.

Es handelt sich hierbei um das sogenannte Clamp-on-Verfahren. Das Clamp- On-Verfahren hat den Vorteil, dass an dem Messrohr keine besonderen Vorkehrungen zu treffen sind. Allerdings besteht bei diesem Clamp-On-Verfahren jedoch der Nachteil, dass die Befestigung der Messvorrichtungen, insbesondere der Ultraschallvorrichtungen an dem Messrohr vergleichsweise aufwändig ist, da sichergestellt werden muss, dass die Messvorrichtungen ordnungsgemäß zueinander ausgerichtet sind, um ein korrektes Messergebnis zu erhalten. Darüber hinaus besteht die Gefahr, dass die Messvorrichtungen, insbesondere Ultraschallvorrichtungen aufgrund äußerer Einflüsse im Gebrauch ihre Position verändern, was das Messergebnis verändert.

Es ist Aufgabe der vorliegenden Erfindung, eine Messvorrichtung zur Bestimmung des Durchflusses eines durch einen Rohrabschnitt hindurchströmenden Fluids bereitzustellen, welche nach dem Ultraschallprinzip arbeitet, einfach montierbar ist, eine vergleichsweise hohe Messgenauigkeit aufweist und auch im Dauereinsatz die hohe Messgenauigkeit behält.

Erfindungsgemäß wird die Aufgabe gelöst durch eine Messvorrichtung zur Bestimmung des Durchflusses eines durch einen Rohrabschnitt hindurchströmenden Fluids, umfassend ein Messrohr mit einer Rohrwand, wenigstens einen Sender zum Senden eines akustischen Signals, wenigstens einen Empfänger zum Empfangen des vom Sender abgegebenen akustischen Signals, eine Reflexionsfläche zur Reflexion des akustischen Signals und eine Datenerfassungseinheit, wobei sowohl der Sender als auch der Empfänger als eine Ultraschallvorrichtung ausgebildet sind, die jeweils an dem Messrohr angeordnet ist und ein Koppelelement und ein Ultraschallwandlerelement umfasst, wobei das Messrohr wenigstens eine Aufnahme für eine Ultraschallvorrichtung aufweist, wobei die Aufnahme entweder als eine Auflagefläche auf der Außenseite des Messrohrs oder als Durchgang durch die Rohrwand des Messrohrs ausgebildet ist und wobei ein Messgerätegehäuse vorgesehen ist, welches den Sender, den Empfänger und die Datenerfassungseinheit vor äußeren Einflüssen schützt.

Das Vorsehen von Auflageflächen auf der Außenseite des Messrohrs oder Durchgängen im Messrohr hat den Vorteil, dass die Position für die Montage von Ultraschallvorrichtungen bereits durch das Messrohr vorgegeben ist. Eine exakte Positionierung der Ultraschallvorrichtungen wird dadurch vereinfacht. In dem Fall, in dem Durchgänge im Messrohr vorgesehen sind, wird zusätzlich die Einkopplung des Messsignals in das strömende Medium vereinfacht, da das akustische Signal nicht durch die Rohrwand geführt werden muss. Die Messgenauigkeit wird dadurch erhöht.

Die Auflagefläche auf der Außenseite des Messrohrs kann bei einem Messrohr mit einem runden oder in etwa runden Querschnitt als Abflachung auf der Außenseite des Messrohrs ausgebildet sein. Alternativ kann ein flanschartiger Ansatz am Messrohr vorgesehen sein, dessen Auflagefläche tangential zum Messrohr verläuft.

Das Messgerätegehäuse, welches vorzugsweise wasserdicht und/oder nicht öffenbar ist, sorgt dafür, dass der Sender, der Empfänger und die Datenerfassungseinheit beispielsweise vor Wasser oder vor Manipulationsversuchen unbefugter Dritter oder versehentlicher Beschädigungen geschützt sind.

Vorzugsweise ist das Messrohr an seinen Endabschnitten jeweils mit einem Flansch versehen, so dass die Messvorrichtung als eine Einheit in ein bestehendes Rohrsystem eingefügt werden kann. Die Messvorrichtung ist vergleichsweise flexibel einsetzbar, da der zur Bestimmung des Durchflusses notwendige Durchmesser des Messrohrs von der Messvorrichtung selbst vorgegeben ist.

Bei einer bevorzugten Weiterbildung ist das Ultraschallwandlerelement scheibenförmig ausgebildet und das Koppelelement weist ein Substratkörper mit einer Aufnahmefläche für das Ultraschallwandlerelement auf, wobei die Aufnahmefläche für das Ultraschallwandlerelement vorzugsweise schräg zur Rohrwand ausgerichtet ist. Hierdurch ist es möglich, die Ultraschallsignale schräg in das Messrohr einzuleiten. Beispielsweise handelt es sich bei dem Ultraschallwandlerelement um eine piezokeramische Scheibe. Das Koppelelement besteht beispielsweise aus Kunststoff.

Damit es in dem Fall, in dem die Ultraschallvorrichtung in einem im Messrohr vorgesehen Durchgang angeordnet, insbesondere eingesteckt ist, im Messrohr zu keiner Beeinflussung der Strömung des Fluids kommt, ist es gemäß einer bevorzugten Ausführungsform vorgesehen, dass das Koppelelement zumindest abschnittsweise in dem Durchgang angeordnet ist und flächenbündig mit der Innenwand des Messrohrs abschließt. Es versteht sich, dass die Außenseite des Koppelelements, welche flächenbündig zur Innenwand des Messrohrs ausgerichtet ist, die Geometrie des Messrohrs aufnimmt. So ist die Außenseite des Koppelelements, welches flächenbündig zur Innenwand eines rechteckigen Rohres ausgebildet ist, als ebene Fläche ausgebildet, wohingegen ein Koppelelement, welches flächenbündig zur Innenwand des runden oder ovalen Messrohrs ausgebildet ist, die Rundung des Messrohrs an seiner Außenseite aufnimmt, um eine glatte Innenwandung im Messrohr zu erhalten.

Gemäß einer Ausführungsform der Messvorrichtung sind der Sender und der Empfänger entlang einer Achse des Messrohrs im Abstand voneinander auf dem Messrohr oder in einem Durchgang des Messrohrs angeordnet, wobei der Sender und der Empfänger vorzugsweise in Form eines Messbalkens ausgebildet sind. Auf diese Weise lässt sich eine Messvorrichtung, bei der das Messsignal entlang eines V-Pfads erfasst wird, herstellen.

Bei einer bevorzugten Weiterbildung ist ein Messbalken mit einem Messbalkengehäuse vorgesehen. Der Messbalken weist im Querschnitt eine längliche Grundform auf, wobei der wenigstens eine Sender an einem Ende des länglichen Messbalkens, und der wenigstens eine Empfänger am anderen Ende des länglichen Messbalkens angeordnet sind und mittig zwischen dem wenigstens einen Sender und dem wenigstes einen Empfänger ein Elektronikelement und/oder ein Anschlusselement vorgesehen ist.

Dies ermöglicht eine sehr kompakte Ausbildung des Senders und des Empfängers, welche einfach auf einem Messrohr oder in einem Durchgang des Messrohrs montiert werden können.

Vorzugsweise ist zumindest der Bodenabschnitt des Messbalkengehäuses aus dem gleichen Material hergestellt wie das Koppelelement, um einen zusätzlichen Signalübergang zwischen dem Koppelelement und dem Messbalkengehäuse zu vermeiden. In diesem Fall können der Bodenabschnitt des Messbalkengehäuses und die Koppelelemente der beiden Ultraschallvorrichtungen einstückig ausgebildet sein. Darüber hinaus kann das Messbalkengehäuse einstückig ausgebildet sein und aus dem gleichen Material wie das Koppelelement bestehen. In diesem Fall können sowohl das Koppelelement als auch das Messbalkengehäuse einstückig ausgebildet sein.

Das für die Reflexion des Sendesignals notwendige Reflexionselement ist vorzugsweise als ringförmiges oder teilkreisförmiges Reflexionselement an der Innenwand des Messrohrs vorgesehen. Um störende Einflüsse des Reflexionselements im Messkanal zu vermeiden, ist das Reflexionselement flächenbündig mit der Innenwand des Messrohrs ausgerichtet.

Anstelle eines ringförmigen Reflexionselements kann selbstverständlich auch ein röhrenförmiges, ringförmiges, teilkreisförmiges oder plattenförmiges Reflexionselement vorgesehen sein. Ein ring- oder röhrenförmiges Reflexionselement oder ein teilkreisförmiges Reflexionselement, welches mehr als die Hälfte des Umfangs des Innenrohrs des Messrohrs bedeckt, hat den Vorteil, dass es sich im Inneren des Messrohrs selbst fixiert. Dieser Vorteil wird verstärkt, wenn es sich bei dem Reflexionselement um ein biegbares elastisches Band beispielsweise aus Metall handelt, welches im Messrohr ein ring- oder röhrenförmiges oder teilkreisförmiges Reflexionselement bildet.

Da das Reflexionselement flächenbündig mit der Innenwand des Messrohrs ausgerichtet ist, beeinflusst das Reflexionselement die Strömung und somit die Strömungsgeschwindigkeit nicht. Hierfür ist in der Innenwand des Messrohrs vorzugsweise eine Aussparung vorgesehen, die die gleichen Maße und die gleiche Geometrie wie das Reflexionselement aufweist, um das Reflexionselement passgenau in der Innenwand des Messrohrs einzufügen.

Bei einer bevorzugten Weiterbildung umfasst das Messrohr ein Außenrohr und ein Innenrohr, wobei sowohl im Außenrohr als auch im Innenrohr ein Durchgang für eine Ultraschallvorrichtung vorgesehen ist und die Ultraschallvorrichtung vorzugsweise flächenbündig mit der Innenwand des Innenrohrs in dem Messrohr eingesetzt ist. Um eine Ultraschallvorrichtung durch die Durchgänge im dem Außenrohr und dem Innenrohr zu führen, versteht es sich, dass die Durchgänge im Außenrohr und Innenrohr die gleichen Maße haben und konzentrisch angeordnet sind.

Das Innenrohr ist vorzugsweise konzentrisch in dem Außenrohr angeordnet. Das Innenrohr hat den Vorteil, den Querschnitt des Messrohrs bei Bedarf zu verringern, so dass die Strömungsgeschwindigkeit erhöht werden kann. Hierdurch lassen sich insbesondere geringe Durchflüsse sicherer erfassen.

Bei einer ersten Ausführungsform kann die Wanddicke des Innenrohrs vergrößert werden, um den Querschnitt des Messrohrs zu verringern, bei einer anderen Ausführungsform können an der Außenseite des Messrohrs Abstandselemente vorgesehen sein, um das Innenrohr im Abstand von dem Außenrohr anzuordnen. Ein Innenrohr kann auch verwendet werden, um das Innere des Messrohrs mit einer anderen Materialschicht als dem Material des Messrohrs auszubilden. Beispielsweise kann das Außenrohr aus Metall und das Innenrohr aus Kunststoff sein.

In dem Fall, in dem das Innenrohr lediglich als Verkleidung des Messrohrs dient, kann die Innenwand des Messrohrs, genauer gesagt die Innenwand des Außenrohrs in dem Bereich, in dem das Innenrohr vorgesehen ist, eine Aussparung aufweisen, um das Innenrohr flächenbündig aufzunehmen.

Bei dieser Ausführungsform einer Messvorrichtung mit Außenrohr und Innenrohr ist es von Vorteil, dass ein Reflexionselement, vorzugsweise ein ringförmiges oder teilkreisförmiges Reflexionselement, an der Innenwand des Innenrohrs vorgesehen ist. Anstelle eines ringförmigen oder teilkreisförmigen Reflexionselements kann selbstverständlich auch ein röhrenförmiges, oder plattenförmiges Reflexionselement vorgesehen sein. Weiterhin kann das Reflexionselement ein biegbares elastisches Band sein, welches im Innenrohr ein ring- oder röhrenförmiges oder teilkreisförmiges Reflexionselement bildet.

Um das Reflexionselement flächenbündig mit der Innenwand des Innenrohrs auszurichten ist in der Innenwand des Innenrohrs vorzugsweise eine Aussparung vorgesehen, die die gleichen Maße und die gleiche Geometrie wie das Reflexionselement aufweist, um das Reflexionselement passgenau in der Innenwand des Innenrohrs einzufügen.

Zur Montage des Innenrohrs in dem Messrohr ist es von Vorteil, dass das Innenrohr zweiteilig aufgebaut ist und beispielsweise mittels einer Schnappverbindung miteinander verbunden ist.

Zum Betreiben der Messvorrichtung ist eine Stromversorgungsvorrichtung vorgesehen, wobei die Stromversorgungsvorrichtung vorzugsweise eine Batterie oder ein Akkumulator und ein die Batterie oder den Akkumulator umgebendes Stromversorgungsgehäuse umfasst. Die Stromversorgungsvorrichtung kann hierbei fest mit der Messvorrichtung verbunden oder austauschbar sein. Hierdurch ist es möglich, die Messvorrichtung auch fern von einem Stromnetz zu betreiben.

Insbesondere zur Messung des Durchflusses von Wasser in Fernleitungen besteht die Gefahr, dass die Messvorrichtung Wasser oder anderen Flüssigkeiten ausgesetzt ist. Von daher ist es von Vorteil, dass eine Steuerelektronik vorgesehen ist, die in einem vorzugsweise wasserdichten Steuerelektronik-Gehäuse untergebracht ist. Beispielsweise ist die Steuerelektronik in ein Steuerelektronik-Gehäuse eingegossen. Die Steuerelektronik umfasst vorzugsweise die Datenerfassungseinheit, so dass auch die Datenerfassungseinheit vor Wasser oder anderen Flüssigkeiten im Gebrauch geschützt ist.

Zur Steuerung des wenigstens einen Senders und zur Übertragung der vom Empfänger erfassten Daten ist es von Vorteil, dass der wenigstens eine Sender und der wenigstens eine Empfänger über eine BUS-Verbindung mit der Steuerelektronik verbunden ist. Eine BUS-Verbindung ist insbesondere dann von Vorteil, wenn eine Vielzahl von Sendern und Empfängern sowie weitere Messsensoren wie etwa Druck- oder Temperatursensoren vorgesehen sind.

Weiterhin ist vorgesehen, dass in dem Messgerätgehäuse der wenigstens eine Sender, der wenigstens eine Empfänger und die Datenerfassungseinheit sowie wenigstens eines der folgenden Bauteile enthalten sind: Steuerelektronik, Stromversorgungsvorrichtung, wenigstens ein weiterer Sensor, wenigstens ein weiterer Empfänger, ein Messsensor zur Erfassung eines anderen physikalischen oder chemischen Parameters als die Strömungsgeschwindigkeit des Fluids, Kommunikationsmodul. Wenn das Messgerätgehäuse wasserdicht ausgebildet ist, besteht nicht nur ein mechanischer Schutz der genannten Bauteile, sondern auch ein Schutz vor eindringendem Wasser.

Um die Messdaten auch an der Messvorrichtung auslesen zu können, ist ein Anzeigeelement vorgesehen.

Die vorliegende Erfindung wird anhand der beigefügten Zeichnungen näher erläutert, in denen zeigen:
- Fig. 1: eine erste Ausführungsform eines Durchflussmessers in perspektivischer Ansicht,
- Fig. 2: die erste Ausführungsform eines Durchflussmessers in zerlegter Darstellung,
- Fig. 3: das Messgerätgehäuse der in Fig. 1 und 2 dargestellten Ausführungsform in zerlegter Darstellung,
- Fig. 4: ein Messrohr mit Messbalken gemäß einer ersten Ausführungsform,
- Fig. 5: das in Fig. 4 dargestellte Messrohr mit Messbalken in zerlegter Darstellung,
- Fig. 6: das in Fig. 4 dargestellte Messrohr mit Messbalken und Verkabelung,
- Fig. 7: das Messrohr in der in den Fig. 4-6 dargestellten Ausführungsform,
- Fig. 8: eine zweite Ausführungsform eines Messbalkens an einem Messrohr,
- Fig. 9: den in Fig. 8 dargestellten Messbalken in einer Ansicht von unten,
- Fig. 10: eine zweite Ausführungsform eines Durchflussmessers in perspektivischer Ansicht,

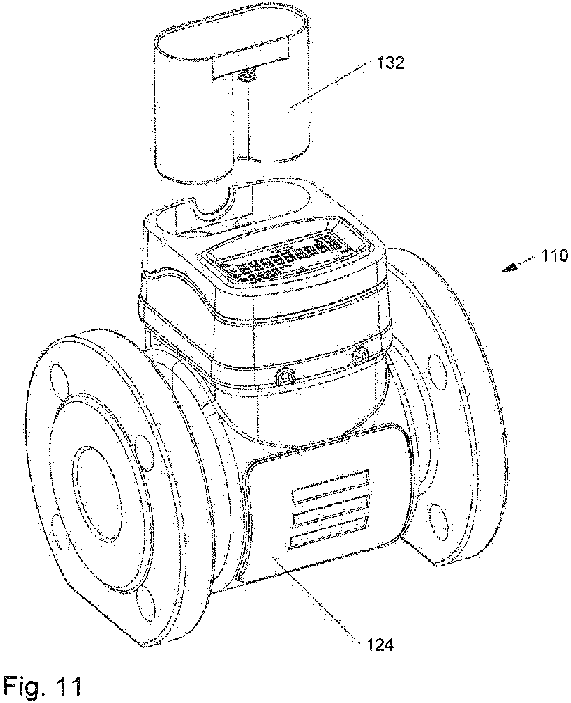

- Fig. 11: den in Fig. 10 dargestellten Durchflussmesser in einer teilweise zerlegten Darstellung,
- Fig. 12: eine Stromversorgungseinheit,
- Fig. 13: die in Fig. 12 dargestellte Stromversorgungseinheit in zerlegter Darstellung,
- Fig. 14: eine erste Ansicht einer Steuereinheit,
- Fig. 15: eine zweite Ansicht einer Steuereinheit,
- Fig. 16: eine schematische Darstellung einer Anordnung von Ultraschallvorrichtungen in einem Messrohr gemäß einer ersten Ausführungsform,
- Fig. 17: eine schematische Darstellung einer Anordnung von Ultraschallvorrichtungen in einem Messrohr gemäß einer zweiten Ausführungsform,
- Fig. 18: einen Messbalken in einer perspektivischen Ansicht,
- Fig. 19: den in Fig. 18 dargestellten Messbalken in zerlegter Darstellung,
- Fig. 20: ein Gehäuse eines Messbalkens gemäß einer zweiten Ausführungsform,
- Fig. 21: die Ultraschallwandlerelemente und die Messeinheit eines Messbalkens gemäß der in Fig. 20 dargestellten Ausführungsform,
- Fig. 22: den Messbalken gemäß der weiteren Ausführungsform,
- Fig. 23: eine Vielzahl von Messbalken in einer Messreihe,
- Fig. 24: ein Messrohr mit einem Innenrohr,
- Fig. 25: das Messrohr der Fig. 24,
- Fig. 26: das Innenrohr der Fig. 24 in zerlegter Darstellung und
- Fig. 27: das Innenrohr der Fig. 24 in montiertem Zustand.

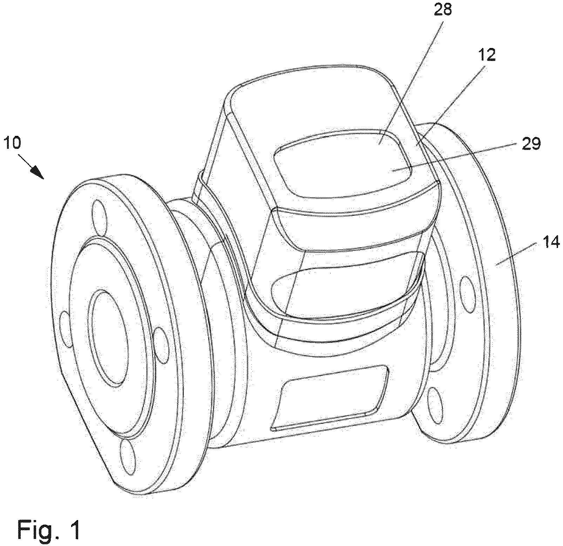

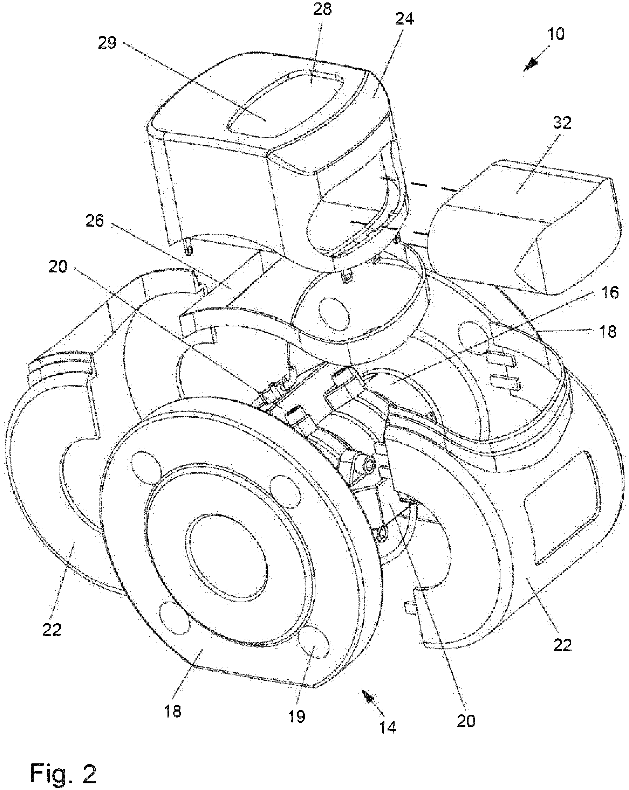

Die Fig. 1 zeigt einen Durchflussmesser 10 mit einem Messgerätgehäuse 12 und einem Messrohr 14 in montiertem Zustand. In Fig. 2 ist der in Fig. 1 dargestellte Durchflussmesser 10 zerlegt dargestellt.

Das Messrohr 14 weist einen Rohrabschnitt 16 sowie zwei an jedem Ende des Rohrabschnitts 16 angeordnete Flansche 18 auf, die sich vom Rohrabschnitt 16 radial nach außen erstrecken. Das Messrohr 12 besteht aus einem Metall und ist vorzugsweise zur Vermeidung von Korrosion beschichtet, insbesondere pulverbeschichtet. Die Flansche 18 dienen dazu, das Messrohr in ein bestehendes Rohrsystem einzubauen und mit vorhandenen Rohrabschnitten des Rohrsystems zu verbinden. Hierfür sind entsprechende Durchlässe 19 in den beiden Flanschen 18 vorgesehen.

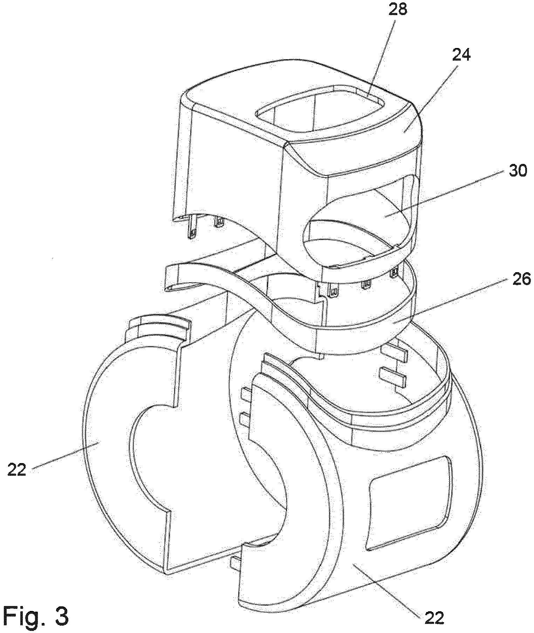

Wie Fig. 3 zeigt, sind auf dem Messrohrabschnitt 16 entlang des Umfangs des Messrohrabschnitts 16 Messbalken 20 vorgesehen. Bei der in Fig. 2 dargestellten Ausführungsform sind drei um 120° versetzt angeordnete Messbalken 20 angebracht, von denen in Fig. 2 nur zwei zu erkennen sind.

Das Messgerätgehäuse 12 umfasst zwei im Querschnitt halbkreisförmige Schalenelemente 22, die den Rohrabschnitt 16 des Messrohrs 16 sowie die Messbalken 20 zwischen den beiden Flanschen 18 umgreifen, und fest miteinander verbindbar sind. Beispielsweise kann eine nicht zerstörungsfrei lösbare Rast- oder Schnappverbindung zwischen den beiden Schalenelementen 22 vorgesehen sein, um Manipulationsversuche unbefugter Dritter an dem Durchflussmesser zu verhindern.

Weiterhin ist ein Gehäusekopf 24 vorgesehen, der mittels eines Dichtungsrings 26 mit den beiden Gehäuseschalen 22 verbunden ist. Auch hier kann zwischen dem Gehäusekopf 24 und den beiden Gehäuseschalen 22 eine nicht zerstörungsfrei lösbare Rast- oder Schnappverbindung vorgesehen sein, um Manipulationsversuche unbefugter Dritter an dem Durchflussmesser zu verhindern.

Die beiden Schalenelemente 22 weisen im zusammengebauten Zustand eine zylindrische Grundform auf. Der Gehäusekopf 24 ist auf der Mantelfläche der montierten Schalenelemente 22 vorgesehen, wobei der Gehäusekopf 24 sowie die beiden Schalenelemente 22 in einem Zustand, in dem sie an dem Messrohr 14 montiert sind, einen Hohlraum bilden.

An der Oberseite des Gehäusekopfs 24 ist ein Fenster 28 vorgesehen, um Daten der Messvorrichtung optisch zu erfassen. Hierfür kann im Inneren des Messgerätgehäuses eine Anzeigeeinheit 29 vorgesehen sein. Weiterhin weist der Gehäusekopf 24 eine Öffnung 30 auf, in der eine Stromversorgungsvorrichtung 32 angeordnet ist.

Befindet sich die Stromversorgungsvorrichtung 32 in der dafür vorgesehenen Öffnung 30, bilden der Gehäusekopf 24 sowie die beiden Schalenelemente 22 in einem Zustand, in dem sie an dem Messrohr 14 montiert sind, einen geschlossenen, vorzugsweise wasserdichten Hohlraum.

Das Messgerätgehäuse ist vorzugsweise aus einem Kunststoff hergestellt.

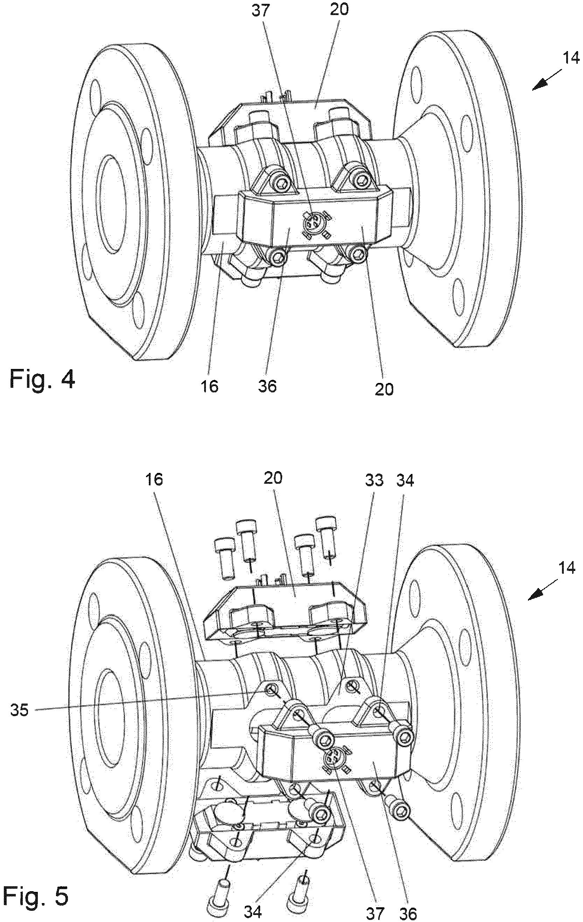

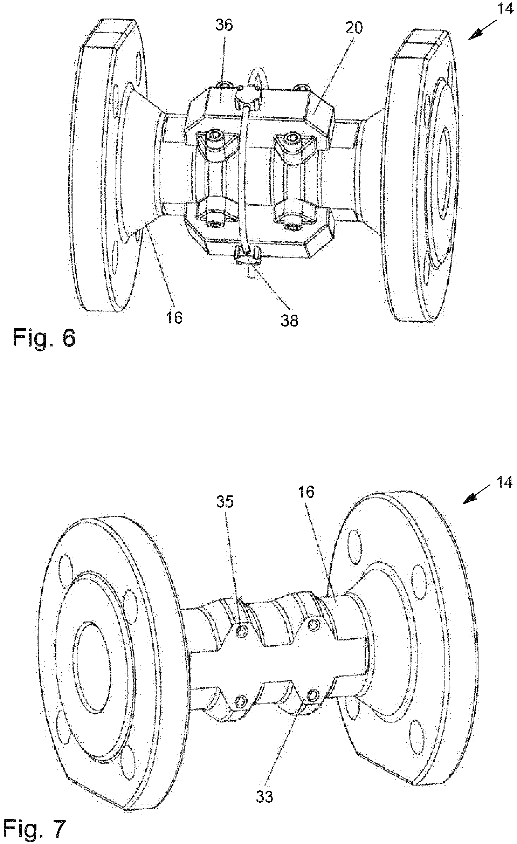

Fig. 4 zeigt das Messrohr 14 sowie die entlang des Umfangs des Rohrabschnitts 16 angeordneten Messbalken 20 im Detail. Wie insbesondere in den Figuren 5 und 7 zu erkennen ist, sind Auflageflächen 33 für die Messbalken 20 an der Außenseite des Messrohrabschnitt 16 an den Stellen, an denen die Messbalken 20 angeordnet sind, vorgesehen. Die Auflageflächen 33 weisen in etwa die Kontur der Unterseite des Messbalkens 20 auf, so dass jeder Messbalken 20 mit seiner Unterseite vollständig auf der Auflagefläche 33 des Rohrabschnitts 16 aufliegt.

Da der Messbalken 20 an seinen Seitenabschnitten Auskragungen mit Durchgängen 34 für eine Schraubverbindung aufweist, sind passend hierzu auf der Auflagefläche 33 Bohrungen 35, insbesondere Gewindebohrungen vorgesehen. Die Bohrungen 35 sind als Sacklochbohrung ausgebildet, um zu verhindern, dass das Fluid in dem Messrohr 14 durch die Bohrung 35 nach außen dringen kann.

Bei der dargestellten Ausführungsform ist die Auflagefläche 33 teilweise in die Außenwand des Rohrabschnitts 16 eingearbeitet. Alternativ kann sich die Auflagefläche 33 auch auf einem plattenartigen Ansatzelement befinden, welches tangential an dem Rohrabschnitt ausgerichtet und mit dem Rohrabschnitt fest verbunden ist.

Jeder Messbalken 20 wird mittels Schrauben an dem Messrohr 20 befestigt. An der Oberseite 36 jedes Messbalkens 20 ist ein elektrischer Anschluss 37 vorgesehen.

In der Figur 6 sind die am Rohrabschnitt 16 montierten Messbalken 20 mit entsprechender Verkabelung gezeigt. In jedem Anschluss 37 eines Messbalkens 20 befindet sich ein Steckelement 38 einer BUS-Verbindung.

Es versteht sich, dass im Rahmen der Erfindung nicht zwangsläufig eine BUS-Verbindung notwendig ist. Es können auch andere, aus dem Stand der Technik bekannte elektrische Verbindungssysteme verwendet werden.

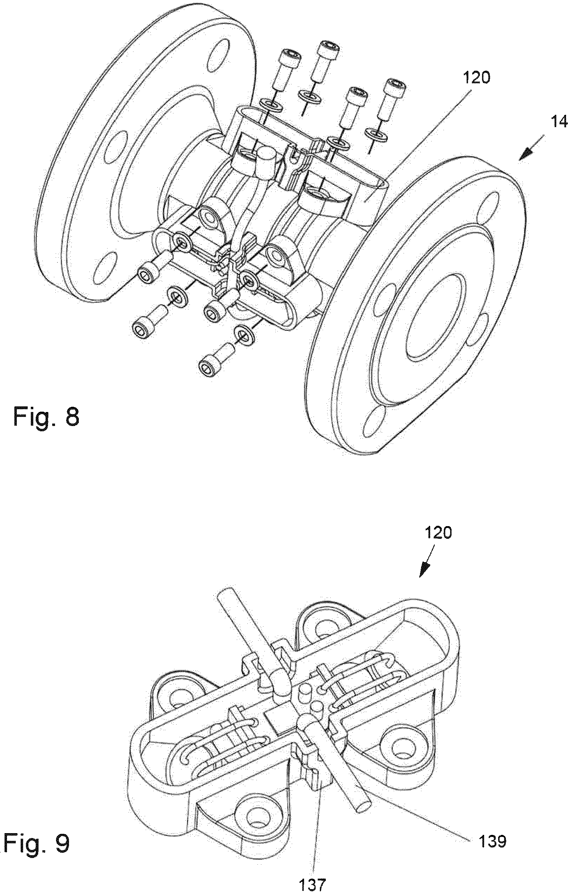

Die Fig. 8 und 9 zeigen eine weitere Ausführungsform eines Messbalkens 120. Bei dieser Ausführungsform befindet sich der elektrische Anschluss 137 zu einer nicht dargestellten Steuereinheit im Innern des Messbalkens 120. Die Kabel 139, die zu der nicht dargestellten Steuereinheit führen, werden seitlich aus dem Messbalken 120 herausgeführt.

Analog wie bei der in den Fig. 4 bis 7 dargestellten Ausführungsform werden auch bei dieser Ausführungsform eines Messbalkens 120 die Messbalken 120 auf den auf dem Rohrabschnitt 16 vorgesehen Auflageflächen 33 positioniert, mittels Schrauben an dem Rohrabschnitt 16 befestigt und elektronisch über eine Verkabelung miteinander verbunden.

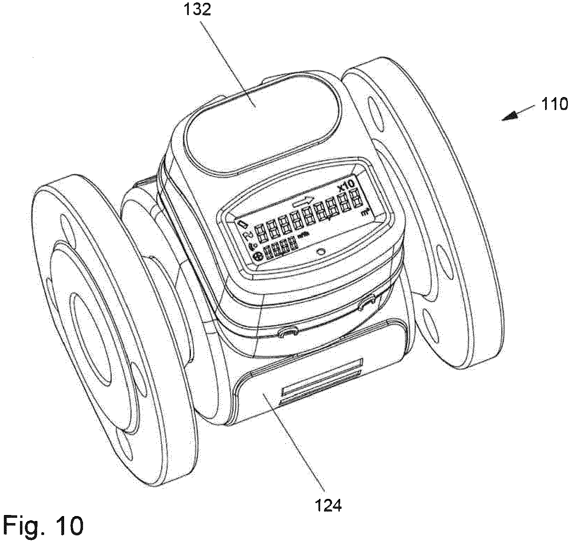

In Fig. 10 ist eine zweite Ausführungsform eines Durchflussmessers 110 in perspektivischer Ansicht gezeigt. Bei dieser Ausführungsform ist die Stromversorgungsvorrichtung 132 als austauschbares Element in dem Gehäusekopf 124 vorgesehen.

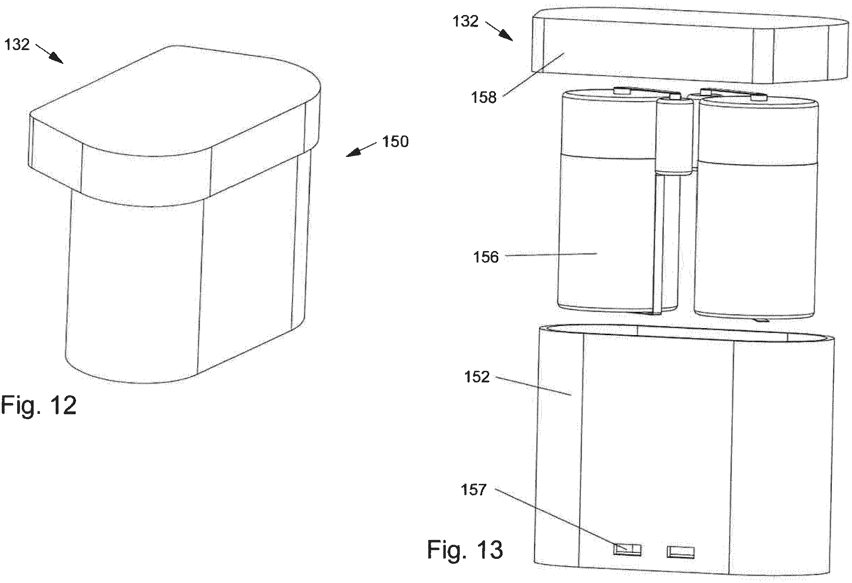

Die Stromversorgungsvorrichtung 132 ist im Detail in den Figuren 12 und 13 dargestellt. Die Stromversorgungsvorrichtung 132 umfasst ein Stromversorgungsgehäuse 150, bestehend aus einem Aufnahmeelement 152 in Form eines becherartigen Behälters und einem Deckel 154, der das Aufnahmeelement 152 bedeckt. Das Aufnahmeelement 152 ist so geformt, dass es zwei nebeneinander angeordnete Batterien oder Akkumulatoren 156 passend aufnehmen kann. An dem Aufnahmeelement 152 sind Öffnungen 157 vorgesehen, durch die Leiterelemente oder dergleichen durchgreifen, um eine elektrische Verbindung zwischen der Batterie bzw. den Akkumulatoren 156 und den Einheiten im Inneren des Messgerätgehäuses, die mit Strom versorgt werden müssen, herzustellen.

Der Deckel 154 weist eine Grifföffnung 158 auf, um die Stromversorgungseinheit 132 aus der in Gehäusekopf 124 vorgesehen Öffnung entnehmen zu können.

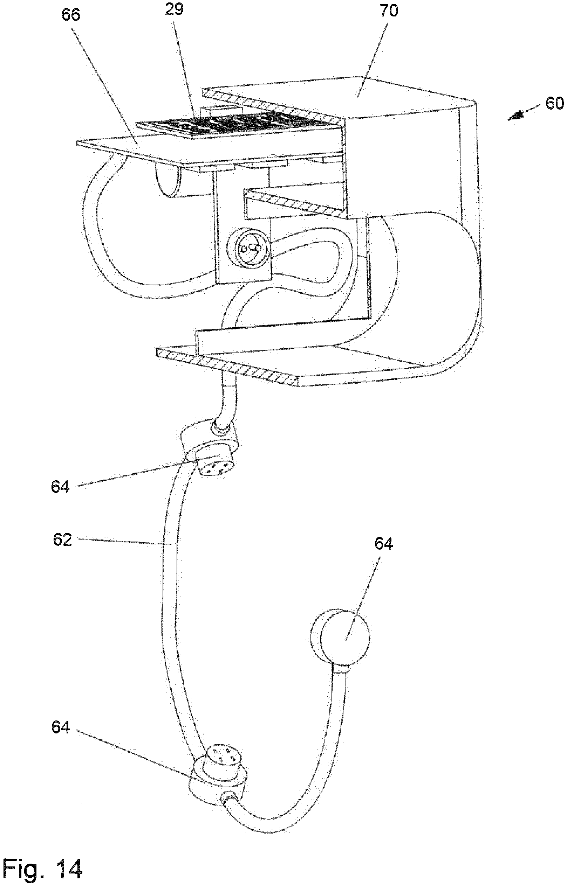

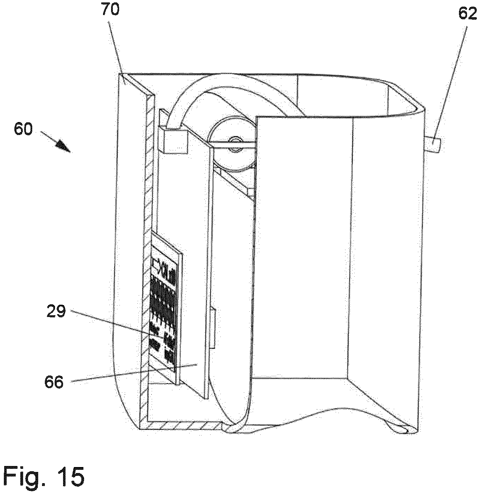

In den Figuren 14 und 15 ist eine Elektronikeinheit 60 dargestellt. Die Elektronikeinheit 60 ist mit einem BUS-Verbindungskabel 62 verbunden, an dem Anschlussstecker 64 in vorgegebenen Abständen angeordnet sind.

Die Elektronikeinheit 60 umfasst eine Platine 66, die mittels entsprechender Anschlüsse mit dem Kabel 62 fest verbunden ist. Weiterhin ist eine Anzeigeeinheit 29 im Bereich der Platine 66 vorgesehen.

Um zu verhindern, dass äußere Einflüsse wie etwa Wasser die Elektronikeinheit 60 sowie die Anzeigeeinheit 29 beschädigen, sind diese in einem Elektronikgehäuse 70 untergebracht. Bei dem Elektronikgehäuse 70 handelt es sich um ein Elektronikgehäuse 70 mit ebenen und/oder gekrümmten Wänden, um dieses einfach in dem Messgerätgehäuse 12; 112 eines Messgeräts 10, 110 unterzubringen. Werden die Platine 66 und/oder die Anzeigeeinheit 29 in das Elektronikgehäuse 70 eingeführt, verbleiben Hohlräume, in denen beispielsweise Wasser kondensieren kann. Das kondensierte Wasser beeinträchtigt jedoch die Lebensdauer der Elektronikeinheit 60. Somit werden die im Elektronikgehäuse verbleibenden Hohlräume, wenn die Platine 66 und/oder die Anzeigeeinheit 29 in das Elektronikgehäuse 70 eingeführt sind, mit einem gießbaren Material ausgefüllt. Idealerweise handelt es sich bei dem gießbaren Material um ein Silikongel oder um Silikonkautschuk. Um Kondensation von Wasser am Übergang zwischen Elektronikeinheit 60 und Kabel 62 zu verhindern, wird auch der Kabelabschnitt, der mit der Elektronikeinheit 60 verbunden ist, in das Elektronikgehäuse 70 eingeführt und mit dem gießbaren Material umgeben.

Bei dem Elektronikgehäuse handelt es sich um ein Polycarbonat-Gehäuse und das Silikongel oder der Silikonkautschuk sind vorzugsweise transparent.

Auf diese Weise entsteht ein besonders wasserdichtes Gehäuse für die Elektronikeinheit 60.

Die Elektronikeinheit 60 kann die gesamte für die Erfassung der Messdaten erforderliche Elektronik, wie etwa Steuereinheit, Datenerfassungseinheit, Fernübertragungseinheit usw. enthalten. Alternativ kann die Elektronikeinheit 60 auch nur einzelne Einheiten, die für die Erfassung der Messdaten erforderlich sind, umfassen. In diesem Fall ist es sinnvoll, jede Einheit entsprechend der oben beschriebenen Weise in einem Gehäuse anzuordnen und mit Gießmasse auszufüllen, um ein wasserdichtes Gehäuse zu erhalten.

In dem Messgerätgehäuse 12 sind somit die Elektronikeinheit, die Stromversorgungseinheit, der Sender und der Empfänger untergebracht. Zusätzlich können noch weitere Module wie etwa ein Kommunikationsmodul in dem Messgerätgehäuse 12 vorgesehen sein, um beispielsweise die erfassten Daten beispielsweise per Funk fern zu übertragen.

Zur Bestimmung weitere physikalischer Parameter wie etwa Temperatur und Druck können zusätzliche Sensoren vorgesehen sein, die im Messrohr angeordnet und mit der Elektronikeinheit der Messvorrichtung verbunden sind.

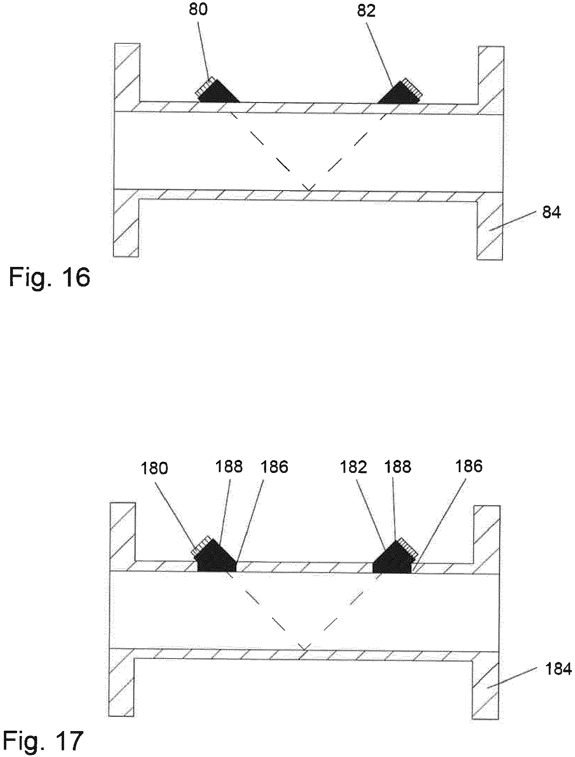

Zum besseren Verständnis sind in den Figuren 16 und 17 verschiedene Messanordnungen zur Bestimmung des Durchflusses mittels Ultraschallvorrichtungen bzw. Ultraschallsensoren dargestellt.

Bei dem in Fig. 16 dargestellten Messverfahren handelt es sich um ein sogenanntes Dry-clamp-on-Messverfahren, bei dem die Ultraschallsensoren bzw. Ultraschallvorrichtungen 80, 82 auf einem Messrohr 84 befestigt sind. In diesem Fall wird das Ultraschallsignal, welches von einem als Sender wirkenden Ultraschallsensor 80 ausgeht, durch die Wand des Messrohrs 84 geleitet, an der dem Ultraschallsensor 80 gegenüberliegenden Wand des Messrohres 84 reflektiert und durch die Wand des Messrohrs wieder in den als Empfänger wirkenden zweiten Ultraschallsensor 82 geführt. Für dieses Messverfahren eigenen sich Messrohre 84 mit einer Auflagefläche, wie beispielsweise in den Fig. 5 und 7 dargestellt. Anstelle der in Fig. 16 schematisch dargestellten Ultraschallsensoren 80, 82 kann auch ein Messbalken verwendet werden.

Die Reflexion des akustischen Signals kann an der Innenwand des Messrohrs 84 stattfinden. Alternativ kann ein Reflexionselement vorgesehen sein.

Bei der in Fig. 17 dargestellten Variante einer Messanordnung ist der Ultraschallsensor bzw. die Ultraschallvorrichtung 180, 182 zumindest abschnittsweise in einem Durchgang 186 des Messrohrs 184 eingelassen. Bei diesem Verfahren handelt es sich um ein sogenanntes Semi- Dry-Verfahren. Dieses Verfahren hat den Vorteil, dass das akustische Signal nicht durch die Rohrwand hindurchgeführt werden muss. Das akustische Signal wird über ein Koppelelement 188 direkt in den Messraum im Messrohr 184 eingekoppelt, an der gegenüberliegenden Wand des Messrohres 184 reflektiert und über das Koppelelement 188 wieder in den als Empfänger wirkenden zweiten Ultraschallsensor 182 geführt. Hierdurch sind weniger Signalbeeinträchtigungen als bei dem zuerst beschriebenen Verfahren erkennbar.

Bei den beschriebenen Verfahren wurde von einer einzigen Reflexion an der den Ultraschallsensoren gegenüberliegenden Rohrwand ausgegangen. Bei diesem Signalweg handelt es sich um einen sogenannten V-Pfad. Alternativ können weitere Reflexionen an den Innenwänden des Messrohrs vorgesehen sein, so dass sich ein sogenannter W-Pfad ausbildet. Die Ausbildung eines V-Pfades oder eines W-Pfades ist von dem Einstrahlwinkel des akustischen Signals in das Messrohr abhängig, welcher beispielsweise durch die Neigung des Ultraschallwandlers gegenüber dem Messrohr eingestellt werden kann.

Das in einem Durchgang 186 durch das Messrohr 184 angeordnete Koppelelement 188 ist flächenbündig mit der Innenwand des Messrohrs 184 ausgerichtet, um störende Einflüsse der Ultraschallsensoren bzw. Ultraschallvorrichtungen 180, 182 im Inneren des Messrohrs 184 zu vermeiden.

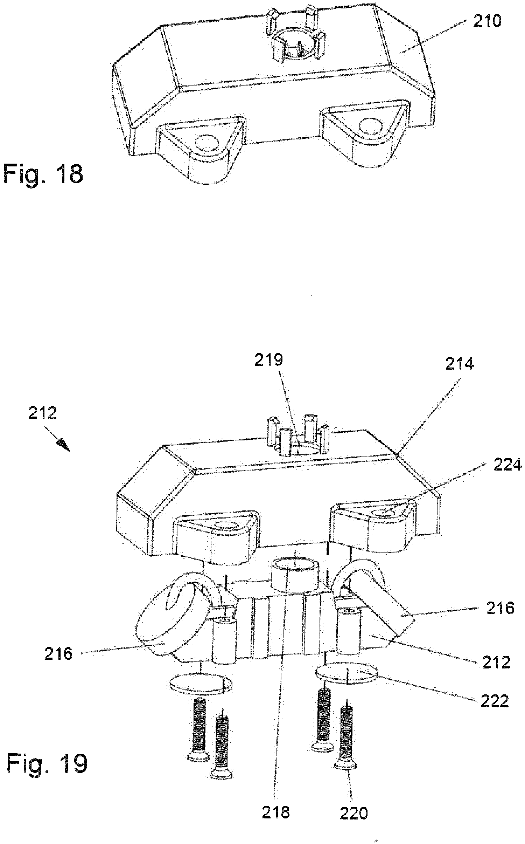

Fig. 18 zeigt einen Messbalken 210, welcher für das sogenannte Semi-Dry-Messverfahren geeignet ist.

Wie insbesondere in Fig. 19 zu erkennen ist, umfasst der Messbalken 210 ein Messbalkengehäuse 212 sowie eine Abdeckkappe 214. Das Messbalkengehäuse 212 weist in einer Ansicht von oben einen länglichen Verlauf auf, wobei an den beiden äußeren Enden des Messbalkengehäuses 212 jeweils ein Ultraschallsensor 216 angeordnet ist. Mittig zwischen den beiden Ultraschallsensoren 216 sind eine nicht dargestellte elektronische Einheit und ein Anschluss 218 für ein Verbindungskabel zu einer nicht dargestellten Steuereinheit vorgesehen. Die Abdeckkappe 214 bedeckt das Messbalkengehäuse 212 vollständig, wobei eine Öffnung 219 im oberen Abschnitt der Abdeckkappe 214 zur Durchführung von Kabeln vorgesehen ist. Das Messbalkengehäuse 212 ist mittels Schrauben 220 fest mit der Abdeckkappe 214 verschraubt.

Die Ultraschallsensoren 216 sind unter einem schrägen Winkel in das Messbalkengehäuse 212 eingeführt und umfassen einen Ultraschallwandler aus einem piezokeramischen Material. Der vorzugsweise scheibenförmige Ultraschallwandler ist zusammen mit den elektrischen Anschlüssen in einen Abschnitt des Messbalkengehäuses 212 eingegossen.

Für eine Impedanzanpassung sind Blättchen 222, vorzugsweise Silikonblättchen vorgesehen, die am Ausgang des Ultraschallsensors 216 angeordnet sind und als Koppelelement bzw. Anpassungs-oder Übertragungselement wirken. An den Seiten der Abdeckkappe 214 sind Auskragungen mit Öffnungen 224 angebracht, um die Abdeckkappe 214 zusammen mit dem Messbalkengehäuse 212 an ein Messrohr zu schrauben

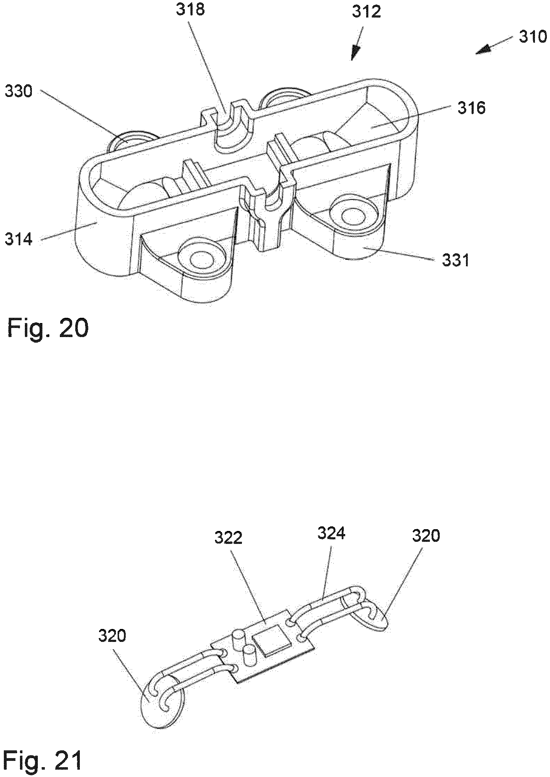

In den Figuren 20 bis 23 ist eine zweite Ausführungsform eines Messbalkens 310 dargestellt, welcher sowohl für den Einsatz in einem Semi-Dry-Verfahren als auch für ein Dry-clamp-on-Verfahren geeignet ist.

Das Messbalkengehäuse 312 weist im Querschnitt eine im Wesentlichen längliche Form auf, wobei an den Seitenabschnitten des Messbalkengehäuses 312 Seitenbefestigungen mit Öffnungen für eine Schraubverbindung vorgesehen sind.

Das Innere des Messbalkengehäuses 312 ist in drei Bereiche unterteilt: einen ersten Wandlerabschnitt 314, welcher an einem Ende des Messbalkengehäuses 312 angeordnet ist, einen zweiten Wandlerabschnitt 316, welcher am entgegengesetzt liegenden Ende des Messbalkengehäuses 312 vorgesehen ist und mittig zwischen dem ersten und zweiten Wandlerabschnitt 314, 316 ein Aufnahmebereich 318 für ein Elektronikelement. An den Seitenwänden des Messbalkengehäuses 312 sind Seitenbefestigungen 331 vorgesehen.

Der erste und der zweite Wandlerabschnitt 314, 316 weisen jeweils einen konische verlaufenden Koppelkeil 330 mit einer unter schrägem Winkel ausgerichteten Aufnahmefläche auf.

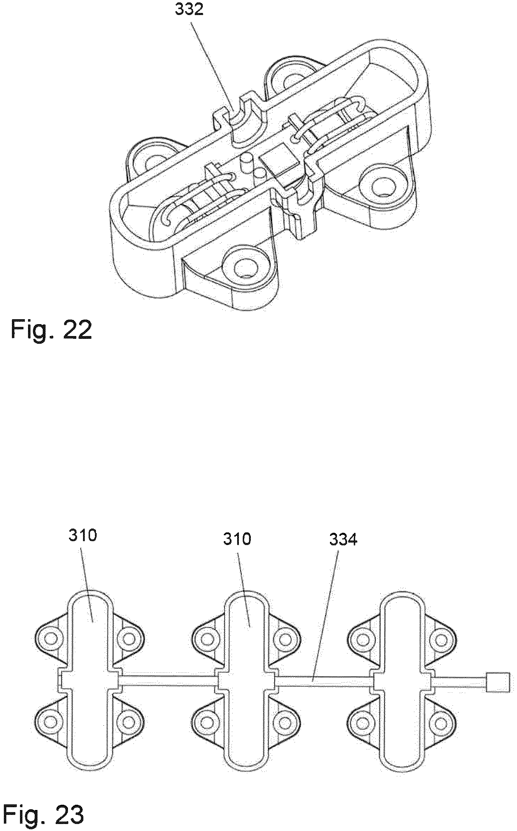

Die Unterseite des Messbalkengehäuses 312 ist, wie in Fig. 23 besser zu erkennen ist, mit einer durchgehenden Bodenfläche gestaltet. Die konisch verlaufenden Koppelkeile 330 und die durchgehende Bodenfläche sind einstückig ausgebildet.

In Fig. 21 sind zwei Ultraschallwandler 320 in Verbindung mit einem Elektronikelement 322 gezeigt. Die beiden Ultraschallwandler 320 sind mittels entsprechender Kabel 324 mit dem gemeinsamen Elektronikelement 322 verbunden. Die Ultraschallwandler 320 sind scheibenförmig ausgebildet und bestehen aus einem piezokeramischen Material.

Das scheibenförmige piezokeramische Material liegt auf der Aufnahmefläche des Koppelkeils 330 auf und ist an dem Koppelkeil 330 befestigt, beispielsweise verklebt. Zur besseren Schalleinkopplung kann zwischen dem Ultraschallwandler und dem Koppelkeil eine Anpassungsschicht aus festen oder flüssigen, insbesondere zähflüssigem Material vorgesehen sein.

In dem Messbalkengehäuse 312 sind seitlich Öffnungen 332 zur Durchführung eines Kabels 334 (siehe Fig. 23) vorgesehen. Das Kabel 334 dient dazu, mehrere Messbalken untereinander und/oder das Elektronikelement des Messbalkens 310 mit einer nicht dargestellten Steuereinheit bzw. Stromversorgung zu verbinden.

Vorzugsweise handelt es sich bei dem Koppelkeil 330 und/oder dem Messbalkengehäuse 312 um PEEK, PSU oder einen anderen Kunststoff, der eine gute akustische Signaleinkopplung in das Messrohr ermöglicht, druckfest, trinkwasserverträglich und alterungsbeständig ist.

Der Bodenabschnitt des Messbalkens 310 steht nach unten über den Seitenbefestigungen 331 vor, so dass der Bodenabschnitt in Zusammenhang mit einem Semi-Dry-Verfahren in einen im Messrohr vorgesehenen Durchgang eingefügt werden kann.

Alternativ können die Seitenbefestigungen 331 und der Bodenabschnitt eine ebene Fläche aufweisen, so dass sich der Messbalken 310 für den Einsatz in einem Dry-clamp-on-Verfahren eignet.

Wenn auch nicht dargestellt, so sind die Hohlräume in dem Messbalkengehäuse 312 mit einem Füllmaterial ausgegossen, um die Ultraschallwandler 320 und das Elektronikelement 322 vor äußeren Einflüssen wie etwa Wasser zu schützen.

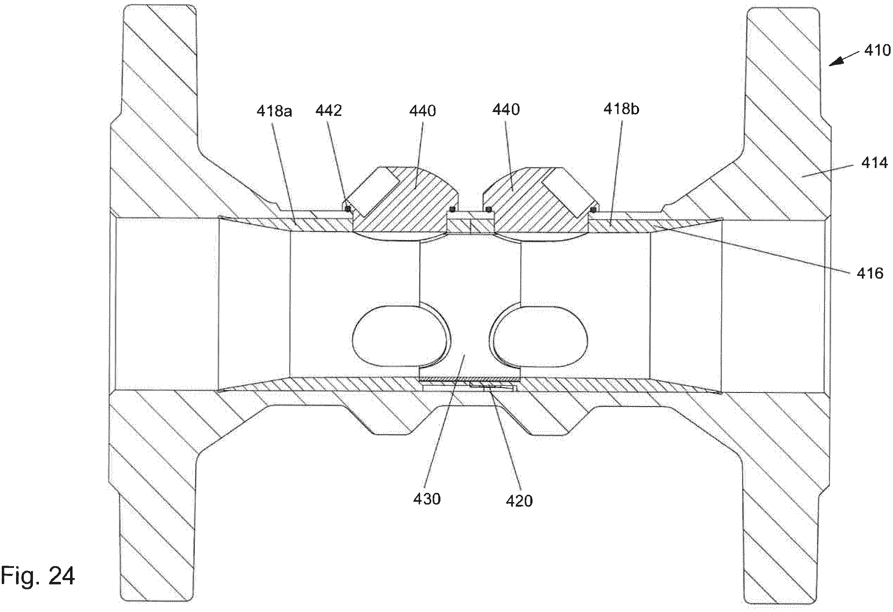

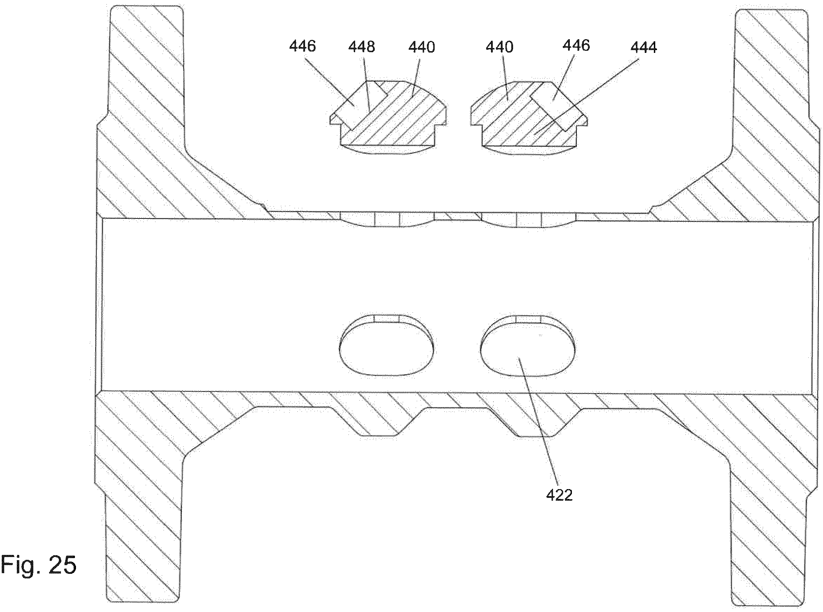

In den Figuren 24 bis 27 ist eine Variante der Messvorrichtung 410 gezeigt, bei der in einem Außenrohr 414 ein Innenrohr 416 vorgesehen ist. Das Außenrohr 414 und das Innenrohr 416 bilden das Messrohr.

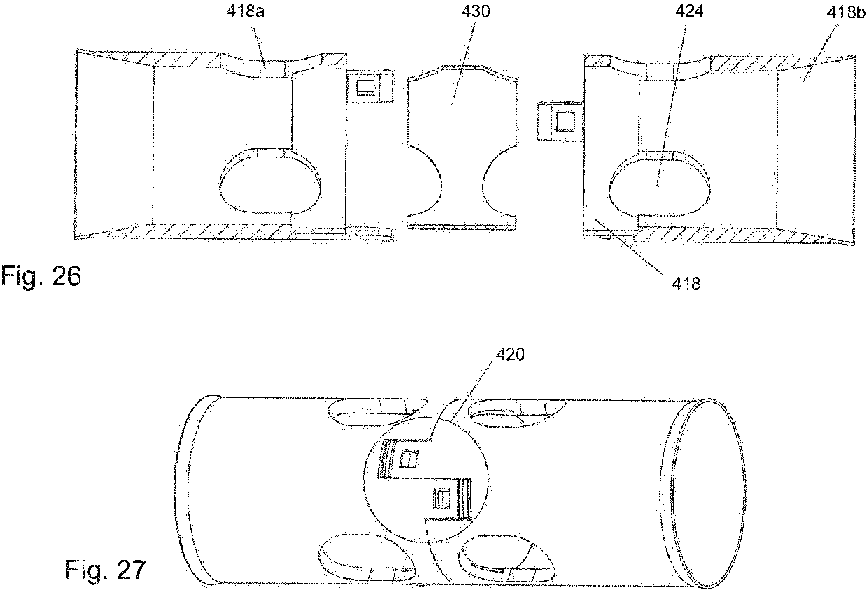

Das Innenrohr 416 besteht vorzugsweise aus Kunststoff und ist, wie Fig. 26 zeigt, aus zwei Teilabschnitten 418a und 418b zusammengesetzt. Die beiden Abschnitte 418a und 418b sind über eine Schnappverbindung 420 fest miteinander verbindbar.

Das Außenrohr 414 ist vorzugsweise aus Metall hergestellt.

In der Innenwand des Innenrohrs 416 ist eine Vertiefung 418 vorgesehen, in der ein Reflexionselement 420 angeordnet ist. Das Reflexionselement 430 ist als ringförmiges Modul ausgestaltet. Sowohl im Messrohr 414 als auch im Innenrohr 416 sind Durchgänge 422, 424 vorgesehen, durch die ein Ultraschallsensor 440 zumindest teilweise durchgreift. Die beiden Ultraschallsensoren 440 liegen bündig an der Innenwand des Innenrohrs 416 an. Die Abdichtung der Ultraschallsensoren 440 erfolgt über einen Dichtring 442, welcher außen am Außenrohr 414 angeordnet ist.

Der Sender und der Empfänger sind als separate Ultraschallsensoren 440 ausgebildet. Jeder Sender und Empfänger umfasst einen Substratkörper 444, der den Koppelkeil bildet und in dem eine Vertiefung 446 zur Aufnahme eines nicht dargestellten Wandlerelements vorgesehen ist. Die Vertiefung 446 weist an ihrem unteren Ende eine schräge Aufnahmefläche 448 für ein Wandlerelement auf.

Das Wandlerelement ist auf der schrägen Aufnahmefläche 448 befestigt, insbesondere verklebt, um das akustische Signal unter einen schrägen Winkel in das Messrohr einzukoppeln bzw. zu empfangen. Jeder Substratkörper 444 ist mittels des Dichtrings 442 an der Außenseite des Außenrohrs 414 fluiddicht in den beiden Durchgängen 422, 424 eingesetzt.

Der Substratkörper 424 schließt an seiner Unterseite flächenbündig mit der Innenwand des Innenrohrs ab.

Anstelle der im Zusammenhang mit den Ausführungsformen beschriebenen BUS-Verbindung können auch andere im Stand der Technik bekannte Verbindungen verwendet werden.

Wenn auch einzelne Merkmale im Zusammenhang mit einer konkreten Ausführungsform dargestellt sind, so versteht es sich, dass die im Rahmen einzelner Ausführungsformen offenbarten Merkmale untereinander kombiniert werden können.

Die Anmelderin behält es sich vor, Teilanmeldungen auf einzelne Aspekte der Erfindung zu richten.

## Patentansprüche

1. Messvorrichtung zur Bestimmung des Durchflusses eines durch einen Rohrabschnitt hindurchströmenden Fluids, umfassend
ein Messrohr (14; 114; 414, 416) mit einer Rohrwand,
wenigstens einen Sender zum Senden eines akustischen Signals,
wenigstens einen Empfänger zum Empfangen des vom Sender abgegebenen akustischen Signals,
eine Reflexionsfläche zur Reflexion des akustischen Signals und
eine Datenerfassungseinheit,
wobei sowohl der Sender als auch der Empfänger als eine Ultraschallvorrichtung (20; 120; 210; 310; 440) ausgebildet sind, die jeweils an dem Messrohr (14; 114; 414, 416) angeordnet ist und ein Koppelelement (222; 330, 444) und ein Ultraschallwandlerelement (320) umfasst,
wobei das Messrohr (14; 114; 414, 416;) wenigstens eine Aufnahme für eine Ultraschallvorrichtung (20; 120; 210; 310; 440) aufweist, wobei die Aufnahme entweder als eine Auflagefläche (33) auf der Außenseite des Messrohrs (14; 114) oder als Durchgang (422, 424) durch die Rohrwand des Messrohrs (414, 416) ausgebildet ist, wobei ein Messgerätegehäuse (12; 112) vorgesehen ist, welches den Sender, den Empfänger und die Datenerfassungseinheit vor äußeren Einflüssen schützt.

2. Messvorrichtung nach Anspruch 1, **dadurch gekennzeichnet, dass** das Messrohr (14; 114; 414, 416) an seinen Endabschnitten jeweils mit einem Flansch (18) versehen ist.

3. Messvorrichtung nach einem der vorhergehenden Ansprüche, **dadurch gekennzeichnet, dass** das Ultraschallwandlerelement (320) scheibenförmig ausgebildet ist und das Koppelelement einen Substratkörper (440) mit einer Auflagefläche (448) für das Ultraschallwandlerelement (320) aufweist, wobei die Auflagefläche (448) für das Ultraschallwandlerelement (320) vorzugsweise schräg zur Rohrwand ausgerichtet ist.

4. Messvorrichtung nach einem der vorhergehenden Ansprüche, **dadurch gekennzeichnet, dass** die Ultraschallvorrichtung (310; 440) in einem im Messrohr (414, 416) vorgesehenen Durchgang (422, 424) angeordnet, insbesondere eingesteckt ist, wobei das Koppelelement zumindest abschnittsweise in dem Durchgang (422, 424) angeordnet ist und flächenbündig mit der Innenwand des Messrohrs (414, 416) abschließt.

5. Messvorrichtung nach einem der vorhergehenden Ansprüche, **dadurch gekennzeichnet, dass** der wenigstens eine Sender und der wenigstens eine Empfänger entlang einer Achse des Messrohrs (14; 114; 414, 416) im Abstand voneinander auf dem Messrohr (14; 114) oder in einem Durchgang des Messrohrs (414, 416) angeordnet sind, wobei der Sender und der Empfänger vorzugsweise in Form eines Messbalkens (20; 120; 210; 310) ausgebildet sind.

6. Messvorrichtung nach einem der vorhergehenden Ansprüche, **dadurch gekennzeichnet, dass** ein Messbalken (20; 120; 210; 310) mit einem Messbalkengehäuse (212; 312) vorgesehen ist und wobei das Messbalkengehäuse (20; 120; 210; 310) im Querschnitt eine längliche Grundform aufweist und der wenigstens eine Sender an einem Ende des länglichen Messbalkens (20; 120; 210; 310), und der wenigstens eine Empfänger am anderen Ende des länglichen Messbalkens (20; 120; 210; 310) angeordnet sind und mittig zwischen dem wenigstens einen Sender und dem wenigstes einen Empfänger ein Elektronikelement (322) und/oder ein Anschlusselement (218) vorgesehen ist.

7. Messvorrichtung nach einem der vorhergehenden Ansprüche, **dadurch gekennzeichnet, dass** ein Reflexionselement (430), vorzugsweise ein ringförmiges oder teilkreisförmiges Reflexionselement, an der Innenwand des Messrohrs (414, 416) vorgesehen ist und flächenbündig mit der Innenwand des Messrohrs (414, 416) ausgerichtet ist.

8. Messvorrichtung nach einem der vorhergehenden Ansprüche, **dadurch gekennzeichnet, dass** das Messrohr (414, 416) ein Außenrohr (414) und ein Innenrohr (416) umfasst, wobei sowohl im Außenrohr (414) als auch im Innenrohr (416) ein Durchgang (422, 424) für eine Ultraschallvorrichtung (440) vorgesehen ist und die Ultraschallvorrichtung (440) vorzugsweise flächenbündig mit der Innenwand des Innenrohrs in dem Messrohr (414, 416;) eingesetzt ist.

9. Messvorrichtung nach Anspruch 8, **dadurch gekennzeichnet, dass** ein Reflexionselement (430), vorzugsweise ein ringförmiges oder teilkreisförmiges Reflexionselement an der Innenwand des Innenrohrs vorgesehen ist.

10. Messvorrichtung nach Anspruch 8 oder 9, **dadurch gekennzeichnet, dass** das Innenrohr (414) zweiteilig aufgebaut ist.

11. Messvorrichtung nach einem der vorhergehenden Ansprüche, **dadurch gekennzeichnet, dass** eine Stromversorgungsvorrichtung (31; 132) vorgesehen ist, wobei die Stromversorgungsvorrichtung vorzugsweise eine Batterie oder einen Akkumulator und ein die Batterie oder den Akkumulator (156) umgebendes Stromversorgungsgehäuse (150) umfasst, wobei vorzugsweise die Stromversorgungsvorrichtung fest mit der Messvorrichtung verbunden oder austauschbar ist.

12. Messvorrichtung nach einem der vorhergehenden Ansprüche, **dadurch gekennzeichnet, dass** eine Steuerelektronik vorgesehen ist, die in einem vorzugsweise wasserdichten Steuerelektronikgehäuse untergebracht ist.

13. Messvorrichtung nach einem der vorhergehenden Ansprüche, **dadurch gekennzeichnet, dass** der wenigstens eine Sender und der wenigstens eine Empfänger über eine BUS-Verbindung mit einer Steuerelektronik verbunden sind.

14. Messvorrichtung nach einem der vorhergehenden Ansprüche, **dadurch gekennzeichnet, dass** in dem Messgerätgehäuse (12, 112) der wenigstens eine Sender, der wenigstens eine Empfänger und die Datenerfassungseinheit sowie wenigstens eines der folgenden Bauteile enthalten sind: Steuerelektronik, Stromversorgungsvorrichtung (32; 132), wenigstens ein weiterer Sender, wenigstens ein weiterer Empfänger, ein Messsensor, Kommunikationsmodul.

15. Messvorrichtung nach Anspruch 14, **dadurch gekennzeichnet, dass** das Messgerätegehäuse (12; 112) ein Anzeigeelement (29) aufweist.
